Europäisches Patentamt

European Patent Office

Office européen des brevets

(19)

(11) Veröffentlichungsnummer: **0 028 753**
**A1**

(12) # EUROPÄISCHE PATENTANMELDUNG

(21) Anmeldenummer: 80106572.3

(22) Anmeldetag: 25.10.80

(51) Int. Cl.³: **C 08 L 69/00**

(30) Priorität: 08.11.79 DE 2945039

(43) Veröffentlichungstag der Anmeldung:
20.05.81 Patentblatt 81/20

(84) Benannte Vertragsstaaten:
DE FR GB IT NL SE

(71) Anmelder: BAYER AG
Zentralbereich Patente, Marken und Lizenzen
D-5090 Leverkusen 1, Bayerwerk(DE)

(72) Erfinder: Buekers, Josef
Kneinstrasse 58a
D-4150 Krefeld(DE)

(72) Erfinder: Müller, Peter Rolf, Dr.
Paul-Klee-Strasse 76
D-5090 Leverkusen 1(DE)

(72) Erfinder: Nouverté, Werner, Dr.
Scheiblerstrasse 95
D-4150 Krefeld(DE)

(72) Erfinder: Peters, Horst, Dr.
Winterberg 25
D-5090 Leverkusen 3(DE)

(72) Erfinder: Lindner, Christian, Dr.
Riehler Strasse 200
D-5000 Köln 60(DE)

(54) Thermoplastische Formmassen aus Polycarbonat, Polyolefin und Butadienpolymerisat.

(57) Thermoplastische Formmassen aus A) 80 bis 96,5 Gew.-Teilen eines aromatischen Polycarbonats, B) 1 bis 10 Gew.-Teilen Polyolefin, und C) 2,5 bis 10 Gew.-Teilen eines Butadien-Styrolcopolymerisats mit 30 bis 90 Gew.-% Butadienanteil oder eines Pfropfcopolymerisats von 80 bis 10 Gew.-% (bezogen auf Pfropfpolymerisat) eines Gemisches von 50 bis 100 Gew.-% Styrol und 0 bis 50 Gew.-% Acrylnitril aufauf 90 bis 20 Gew.-% (bezogen auf Pfropfpolymerisat) Polybutadien, wobei sich die Gew.-Teile A), B) und C) zu 100 erganzen.

BAYER AKTIENGESELLSCHAFT                    5090 Leverkusen, Bayerwerk
Zentralbereich                    - 1 -    G/Rz
Patente, Marken und Lizenzen


Thermoplastische Formmassen
aus Polycarbonat, Polyolefin und Butadienpolymerisat

Gegenstand der Erfindung sind thermoplastische Formmassen aus

A)   80 bis 96,5 Gew.-Teilen eines aromatischen Polycarbonats;

B)   1 bis 10 Gew.-Teilen Polyolefin;

C)   2,5 bis 10 Gew.-Teilen eines Butadien-Styrol-Copolymerisats mit

               30 bis 90 Gew.-% Butadienanteil oder eines
                         Pfropfcopolymerisats von

               80 bis 10 Gew.-%, bezogen auf Pfropfpolymerisat, eines Gemisches von

               50 bis 100 Gew.-% Styrol und

               0 bis   50 Gew.-% Acrylnitril auf 90 bis
                         0 Gew.-%, bezogen auf Pfropfpolymerisat, Polybutadien,

wobei sich die Gewichts-Teile A), B) und C) zu 100 ergänzen.


Bevorzugte Formmassen enthalten 90 bis 95 Gew.-Teile aromatisches Polycarbonat und, jeweils unabhängig voneinander,
2,5 bis 5 Gew.-Teile Polyolefin und Pfropfcopolymerisat
von Styrol und Acrylnitril auf Polybutadien.


Le A 19 977 - Europa

- 2 -

Die Formmassen werden im allgemeinen erhalten durch Vermischen der Komponenten in der Schmelze, z.B. auf Ein- oder Mehrwellenschneckenmaschinen.

Die Formmassen besitzen überraschenderweise ein verbessertes Sprödbruchverhalten auch bei niederen Temperaturen und verringerte Spannungsriß-Empfindlichkeit bei guter Fließnahtfestigkeit und Hitzebeständigkeit. Sie sind demnach zur Herstellung von Formteilen aller Art geeignet.

Gegenüber Mischungen aus Polycarbonat und Polyolefin ist die Homogenität, Neigung zur Delamination und Fließnahtfestigkeit verbessert und gegenüber Mischungen aus Polycarbonat und ABS die Hitzestabilität, insbesondere bei hohen Verarbeitungstemperaturen.

Unter aromatischen Polycarbonaten im Sinne dieser Erfindung werden Homopolycarbonate und Copolycarbonate verstanden, denen z.B. ein oder mehrere der folgenden Diphenole zugrundeliegen:

Hydrochinon

Resorcin

Dihydroxydiphenyle

Bis-(hydroxyphenyl)-alkane

Bis-(hydroxyphenyl)-cycloalkane

Bis-(hydroxyphenyl)-sulfide

Bis-(hydroxyphenyl)-ether

Bis-(hydroxyphenyl)-ketone

Bis-(hydroxyphenyl)-sulfoxide

Bid-(hydroxyphenyl)-sulfone

$\alpha$, $\alpha$'-Bis-(hydroxyphenyl)-diisopropylbenzole,

Le A 19 977

0028753

- 3 -

sowie deren kernalkylierte und kernhalogenierte Verbindungen. Diese und weitere geeignete Diphenole sind
z.B. in den US-Patentschriften 3 028 365, 3 275 601,
3 148 172, 3 062 781, 2 991 273, 3 271 367, 2 999 835,
2 970 131 und 2 999 846, in den deutschen Offenlegungsschriften 1 570 703, 2 063 050, 2 063 052,
2 211 956, 2 211 957, der französischen Patentschrift
1 561 518, und in der Monographie "H. Schnell, Chemistry and Physics of Polycarbonates, Interscience
Publishers, New York, 1964" beschrieben.

Bevorzugte Diphenole sind z.B.:

4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
$\measuredangle$,$\measuredangle$'-Bis-(4-hydroxyphenyl)-p-diisopropylbenzol,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan,
$\measuredangle$,$\measuredangle$'-Bis-(3,5-dimethyl-4-hydroxyphenyl)-p-diisopropyl-
benzol,
2,2-Bis-(3,5-dichlor-4-hydroxyphenyl)-propan,
2,2-Bis-(3,5-dibrom-4-hydroxyphenyl)-propan.

Besonders bevorzugte Diphenole sind z.B.:

Le A 19 977

2,2-Bis-(4-hydroxyphenyl)-propan,
2,2-Bis-(3,5-dimethyl-4-hydroxyphenyl)-propan,
2,2-Bis-(3,5-dichlor-4-hydroxyphenyl)-propan,
2,2-Bis-(3,5-dibrom-4-hydroxyphenyl)-propan,
1,1-Bis-(4-hydroxyphenyl)-cyclohexan.

Bevorzugte aromatische Polycarbonate sind solche, denen ein oder mehrere der als bevorzugt genannten Diphenole zugrundeliegen. Besonders bevorzugt werden Copolycarbonate, denen 2,2-Bis-(4-hydroxyphenyl)-propan und eines der anderen als besonders bevorzugt genannten Diphenole zugrundeliegen. Besonders bevorzugt sind weiterhin Polycarbonate allein auf Basis von 2,2-Bis-(4-hydroxyphenyl)-propan oder 2,2-Bis-(3,5-dimethyl-4-hydroxyphenol)-propan.

Die aromatischen Polycarbonate können nach bekannten Verfahren hergestellt werden, so z.B. nach dem Schmelzumesterungsverfahren aus Bisphenol und Diphenylcarbonat und dem Zweiphasengrenzflächenverfahren aus Bisphenolen und Phosgen, wie es in der obengenannten Literatur beschrieben ist.

Die aromatischen Polycarbonate können durch den Einbau geringer Mengen, vorzugsweise von Mengen zwischen 0,05 und 2,0 Mol-% (bezogen auf eingesetzte Diphenole) an drei- oder mehr als dreifunktionellen Verbindungen, beispielsweise solchen mit drei oder mehr als drei phenolischen Hydroxygruppen, verzweigt sein.

Polycarbonate dieser Art sind z.B. in den deutschen Offenlegungsschriften 1 570 533, 1 595 762, 2 116 974, 2 113 347, der britischen Patentschrift 1 079 821,

0028753

- 5 -

der US-Patentschrift 3.544.514 und in der deutschen Offenlegungsschrift 2.500.092 beschrieben.

Einige der verwendbaren Verbindungen mit drei oder mehr als drei phenolischen Hydroxigruppen sind beispielsweise Phloroglucin, 4,6-Dimethyl-2,4,6-tri-(4-hydroxiphenyl)-hepten-2, 4,6-Dimethyl-2,4,6-tri-(4-hydroxiphenyl)-heptan, 1,3,5-Tri-(4-hydroxiphenyl)-benzol, 1,1,1-Tri-(4-hydroxiphenyl)-ethan, Tri-(4-hydroxiphenyl)-phenylmethan, 2,2-Bis-/4,4-bis-(4-hydroxiphenyl)-cyclohexyl7-propan, 2,4-Bis-(4-hydroxiphenyl-isopropyl)-phenol, 2,6-Bis-(2'-hydroxi-5'-methyl-benzyl)-4-methylphenol, 2-(4-Hydroxiphenyl)-2-(2,4-dihydroxiphenyl)-propan, Hexa-(-(4-hydroxiphenylisopropyl)phenyl)-ortho-terephthalsäureester, Tetra-(4-hydroxiphenyl)-methan, Tetra-(4-(4-hydroxiphenylisopropyl)-phenoxi)-methan und 1,4-Bis-((4',4"-dihydroxitriphenyl)-methyl)-benzol. Einige der sonstigen dreifunktionellen Verbindungen sind 2,4-Dihydroxibenzoesäure, Trimesinsäure, Cyanurchlorid, 3,3-Bis-(4-hydroxiphenyl)-2-oxo-2,3-dihydroindol und 3,3-Bis-(4-hydroxi-3-methyl-phenyl)-2-oxo-2,3-dihydroindol.

Die aromatischen Polycarbonate sollen in der Regel mittlere Gewichtsmittel-Molekulargewichte $\overline{M}_w$ von 10.000 bis über 200.000, vorzugsweise von 20.000 bis 80.000 haben, ermittelt durch Messungen der rel. Viskosität in $CH_2Cl_2$ bei 25°C und einer Konzentration von 0,5 Gew.-%.

Im Falle der Polycarbonatmischungen können den hochmolekularen Polycarbonaten mit $\overline{M}_w$ von 10.000 bis

Le A 19 977

200 000 auch kleine Anteile niedermolekularer Polycarbonate, z.B. mit einem mittleren Polymerisationsgrad von 2 bis 20, zugemischt sein.

Zur Einstellung des Molekulargewichts $\bar{M}_w$ der Polycarbonate werden in bekannter Weise Kettenabbrecher wie beispielsweise Phenol oder Halogenphenole oder Ethylphenole in den berechneten Mengen eingesetzt.

Als Polyolefine werden im allgemeinen bevorzugt Polyethylen, Polypropylen und Mischpolymerisate aus Ethylen und Propylen. Im Prinzip sind alle derartigen kommerziell hergestellten Produkte brauchbar.

Butadienstyrolcopolymerisate mit 30 bis 90 Gew.-% Butadiengehalt sind ebenfalls handelsüblich, es handelt sich um sogenannte SBR-Kautschuke, auch hier sind alle handelsüblichen Produkte einsetzbar.

Von den Pfropfpolymerisaten von Styrol und Acrylnitril auf Polybutadien - bevorzugt sind als Pfropfmonomere Gemische aus 50 bis 90 Gew.-% Styrol und 10 bis 50 Gew.-% Acrylnitril, insbesondere Gemische aus 60 bis 80 Gew.-% Styrol und 20 bis 40 Gew.-% Acrylnitril - die ebenfalls handelsüblich sind unter der Bezeichnung ABS-Polymerisate, werden besonders solche verwendet, die wenig Pfropfmonomere, Styrol und Acrylnitril, und viel Kautschuk enthalten, besonders bevorzugt sind Produkte mit ungefähr 80 % Polybutadienanteil.

Pfropfpolymerisate von Styrol allein auf Polybutadien, die etwa 90 bis 20 Gew.-% Polybutadien enthalten, sind ebenfalls geeignet.

Le A 19 977

Beispiele:

Die Zusammensetzung und die Eigenschaften der Mischungen ergeben sich aus der Tabelle 1. Die Produkte werden hergestellt durch Mischen der Komponenten auf einem Doppelwellenextruder (Werner & Pfleiderer) ZSK 53 bei Temperaturen von 260 - 280$^{\circ}$C. Kerbschlagzähigkeit ist bestimmt nach DIN 53 453; Izod-Kerbschlagzähigkeit nach ASTM-D 256.

Le A 19 977

TABELLE 1

| Beispiel | Vergleich | 1 | 2 | 3 | 4 | 5 |
|---|---|---|---|---|---|---|
| **Zusammensetzung (Gew.-Tle)** | | | | | | |
| Poly-carbonat [1] | 100 | 95 | 90 | 95 | 90 | 89 |
| Poly-ethylen [2] | | 2,5 | 5 | 2,5 | 5 | 2 |
| Butadien-Polymeres [3] | | 2,5 | 5 | | | |
| Butadien-Polymeres [4] | | | | 2,5 | 5 | 9 |
| Butadien-Polymeres [5] | | | | | | |
| **Eigenschaften** | | | | | | |
| Kerbschlag-zähigkeit $KJ/m^2$ | 40   40 | 50 – 70 | 40 – 60 | 40 – 60 | 30 – 50 | 35 – 45 |

Izod-Kerbschlagzähigk. (1/8") J/m

| | Vergleich | 1 | | | 2 | | | 3 | | | 4 | | | 5 | | |
|---|---|---|---|---|---|---|---|---|---|---|---|---|---|---|---|---|
| | 310°C | 280 | 310 | 340°C | 280 | 310 | 340°C | 280 | 310 | 340°C | 280 | 310 | 340°C | 280 | 310 | 340°C |
| RT | 800 | 800 | 800 | 800 | 700 | 700 | 680 | 700 | 700 | 700 | 580 | 570 | 580 | 470 | 480 | 470 |
| -20°C | 200 | 550 | 590 | 580 | 540 | 540 | 530 | 470 | 490 | 480 | 410 | 410 | 410 | 400 | 390 | 390 |
| -40°C | 100 | 260 | 260 | 250 | 370 | 420 | 310 | 220 | 210 | 210 | 180 | 200 | 180 | 190 | 190 | 190 |

1) Bayer Makrolon 2800, $\eta$ rel. 1,288 – 1,298

2) Chemische Werke Hüls, Vestolen A 6016

3) Butadien-Polymeres mit 80 % Butadien und 20 % Styrol/Acrylnitril mit 72 % Styrol und 28 % Acrylnitril

4) Butadien-Polymeres mit 50 % Butadien und 50 % Styrol/Acrylnitril mit 72 % Styrol und 28 % Acrylnitril

5) Butadien-Polymeres mit 80 % Butadien und 20 % n- und tert.-Butylacrylat-Harz

Patentanspruch

Thermoplastische Formmassen aus

A)    80 bis 96,5 Gew.-Teilen eines aromatischen Polycarbonats;

B)    1 bis 10 Gew.-Teilen Polyolefin;

C)    2,5 bis 10 Gew.-Teilen eines Butadien-Styrol-Polymerisats mit 30 bis 90 Gew.-% Butadienanteil
              oder eines Pfropfcopolymerisats von 80 bis
              10 Gew.-% (bezogen auf Pfropfpolymerisat)
              eines Gemisches von 50 bis 100 Gew.-% Styrol
              und 0 bis 50 Gew.-% Acrylnitril auf 90 bis
              20 Gew.-% (bezogen auf Pfropfpolymerisat)
              Polybutadien,

wobei sich die Gewichts-Teile A), B) und C) zu 100 ergänzen.

Le A 19 977 - Europa

**Europäisches Patentamt**

## EUROPÄISCHER RECHERCHENBERICHT

| | EINSCHLÄGIGE DOKUMENTE | | KLASSIFIKATION DER ANMELDUNG (int. Cl.³) |
|---|---|---|---|
| Kategorie | Kennzeichnung des Dokuments mit Angabe, soweit erforderlich, der maßgeblichen Teile | betrifft Anspruch | |
| | DE - A - 2 304 214 (GENERAL ELECTRIC)<br><br>  * Ansprüche 1-8 *<br><br>-- | 1 | C 08 L 69/00 |
| | FR - A - 2 403 366 (GENERAL ELECTRIC)<br><br>  * Ansprüche 1-10 *<br>& DE - A - 2 839 351<br><br>-- | 1 | |
| | CHEMICAL ABSTRACTS, Band 80, Nr. 18, 6. Mai 1974, Seite 34, Zusammenfassung Nr. 96793m, Columbus, Ohio, US<br>& JP - A - 73 85 641 (MITSUBISHI GAS CHEMICAL CO. INC.) (13-11-1973)<br>  * Zusammenfassung *<br><br>---- | 1 | **RECHERCHIERTE SACHGEBIETE** (Int. Cl.³)<br><br>C 08 L 69/00 |

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19-02-1981 | DECOCKER |

EPA form 1503.1  06.78